# EUROPEAN PATENT SPECIFICATION

(11) **EP 2 359 724 B1**
(45) Date of publication and mention of the grant of the patent: **01.08.2012**
(21) Application number: 09180916.0
(22) Date of filing: 29.12.2009
(51) Int. Cl.: A47J 19/02

(54) **Juicer structure**
Entsafterstruktur
Structure de centrifugeuse

(43) Date of publication of application: 24.08.2011
(73) Proprietor: Ya Horng Electronic Co., Ltd., Antin Hsiang, Tainan Hsien (TW)
(72) Inventor: Huang, Jin Yi, Antin Hsiang, Tainan Hsien (TW)
(74) Representative: Chaillot, Geneviève

(56) References cited:
- CN-Y- 201 205 194
- DE-U1- 29 903 243

## Description

### BACKGROUND OF THE INVENTION

### Field of the Invention

This invention relates generally to a juicer structure and more particularly to one that is capable of boosting the stability and safety of the joining between its clutch and blade turntable.

### Description of the Prior Art

As the living standard of people is constantly being lifted, the target for having quality life is almost inevitable to all consumers. The demand for a juicer, the traditionally unnecessary home appliance, is growing yearly, which facilitates the changing of consumer attitudes from pursuing the most fundamental demands of plain living only towards nutritious and healthy demands of select living. And that phenomenon further draws sizable attention towards the juicer. Prior juicers (see DE-U-299 03 243) have a blade turntable fixed in the body and driven by a driving unit, where the food ingredients to be extracted are pressed on the blade turntable for being cut and ground by the blades. Meanwhile, the extracted juice is pushed out from the blade turntable by means of the exertion of centrifugal force as the blade turntable rotates, and the juice is then forced to pass through the filter which is fixed at the cylinder of the blade turntable, to achieve both extraction and filtering of the juice. The structure that driving unit drives the blade turntable to rotate is through a clutch which is fixed at the terminal of the driving unit, where the clutch is provided with gear notches at its joining end, which are embedded by the ribs at the joining end of the blade turntable, to enable the blade turntable to be driven by the driving unit. However, the joining between the clutch and the blade turntable is merely a plain enclosure and a single tier contact, which lacks radial linking force. Therefore, the blade turntable is not only lousy in coupling stability but possible to fall off from the clutch, which will probably bring about damage to safety. In the light of the aforementioned drawbacks of the prior art, this inventor conceived the idea for the advanced improvement, and eventually the endeavors gave birth to this invention.

### SUMMARY OF THE INVENTION

The objective of this invention is to provide a juicer structure that is able to boost the stability and safety of the joining between its clutch and blade turntable.

To accomplish the aforementioned objects, this invention features plural tiers of joining surfaces near the terminal portion of the driving unit for the connection with the clutch of the blade turntable, where each joining surface is provided with a symmetrical bead hole. A bead hole allows protrusion of partial curved side at one end of a rod, where the rod is located in the clutch and pushed outward by a spring. The blade turntable is provided with an embedding holder which has plural tiers along its joining end to the clutch, where the inner diameters of the tiers are fit to the outer diameters of the joining surfaces of the clutch. And the embedding holder is provided with an embedding hole corresponding to each location of the protruded curved side of the rod at the corresponding joining surface. By means of the aforesaid setup, the linking of the blade turntable with the clutch is achieved by the joining of plural tiers of the embedding holder and of the joining surfaces. Each curved side of a rod is lodged in the corresponding embedding hole, which establishes a radial coupling between the two.

An object of the invention is therefore a juicer structure, comprising : a body, comprising a core and a middle member placed thereon, where the core is provided with a driving unit therein, while the middle member is provided with a receptacle therein; and a blade turntable, set up in the receptacle of the middle member, and having axial embedding coupling with a clutch at its bottom, where the clutch is located at the terminal of the driving unit, to enable said blade turntable driven by the driving unit for rotation; a filter being set up around said blade turntable, and a disk-shaped blade being set up on a bottom stand in the filter; wherein the joining between the clutch and said blade turntable being made of a plurality of tiers of joining surfaces, and each joining surface of one tier being provided with a symmetric bead hole, and a radial rod being set up in the joining surface corresponding to each bead hole, where each rod is joined with a spring in the way that the spring pushes the rod to have the curved side at one end of the rod moved through the corresponding bead hole and exposed on the corresponding joining surfaces; said blade turntable being provided with an embedding holder at the end connected to the clutch, where the inner diameter of the embedding holder is fit to the outer diameter of the joining surfaces of the clutch, and the embedding holder being provided with an embedding hole corresponding to each location of the protruded curved side of the rod, as said blade turntable and the clutch being connected together, the embedding holder and the joining surfaces being joined together in a plural-tier embedding, and each curved side of the rod being lodged in the corresponding embedding hole for an axial connection.

Preferably, the plural tiers of joining surfaces between the clutch and said blade turntable are in the shape of top tier and bottom tier arrangement, and the outer diameter of the top tier being shorter than that of the bottom tier, while the embedding holder of said blade turntable has the matching design, where the curved sides at the end of the rod are set up in the way to enable the curved sides to moved through the corresponding bead holes and exposed on the joining surfaces of the top and bottom tiers respectively.

Preferably, the plural tiers of joining surfaces between the clutch and said blade turntable are in one plane and an inner tier and outer tier arrangement design with a joining gap between the two, while the embedding holder of said blade turntable 2 has the matching design, where the curved sides at the end of the rod are set up in the way to enable the curved sides to moved through the corresponding bead holes 31 and exposed on the joining surfaces of the inner and outer tiers respectively.

Preferably, the inner wall of the receptacle of the middle member is set up with a plurality of inclined protruded ribs.

Preferably, a hollow second blade is set up on the top of the blade, and a second filter being built in between the two blades to enable the second filter to be placed inside the inherent filter.

### BRIEF DESCRIPTION OF THE DRAWINGS

FIG. 1 is an outer view of an exemplary embodiment of this invention;
FIG. 2 is an exploded view of the middle member and the blade turntable of the first exemplary embodiment of this invention;
FIG. 3 is an exploded view of the blade turntable and the clutch of the first exemplary embodiment of this invention;
FIG. 4 is an exploded view of the structure of the clutch of the first exemplary embodiment of this invention;
FIG. 5 is an assembled sectional view of the blade turntable and the clutch of the first exemplary embodiment of this invention;
FIG. 6 is a three-dimensional view of the structure of the blade turntable of the second exemplary embodiment of this invention;

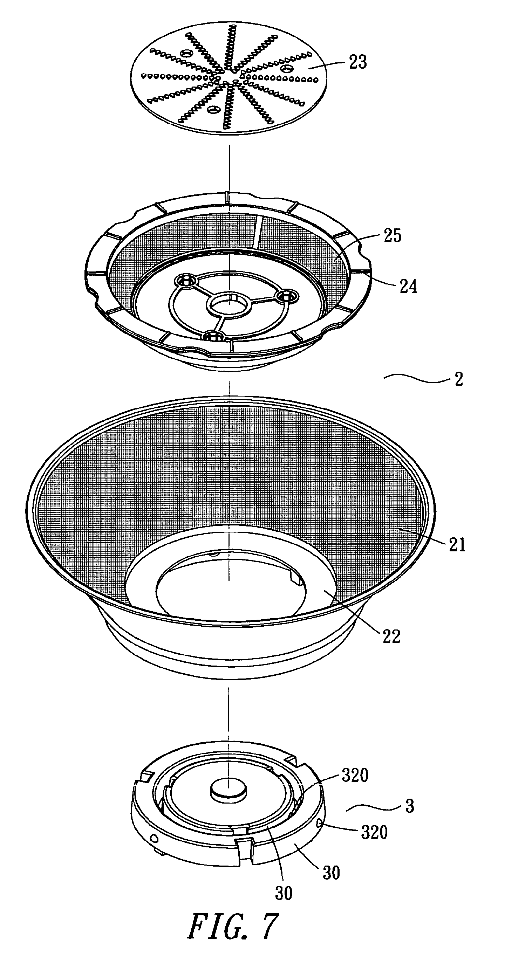

FIG. 7 is an exploded view of the blade turntable and the clutch of the second exemplary embodiment of this invention;

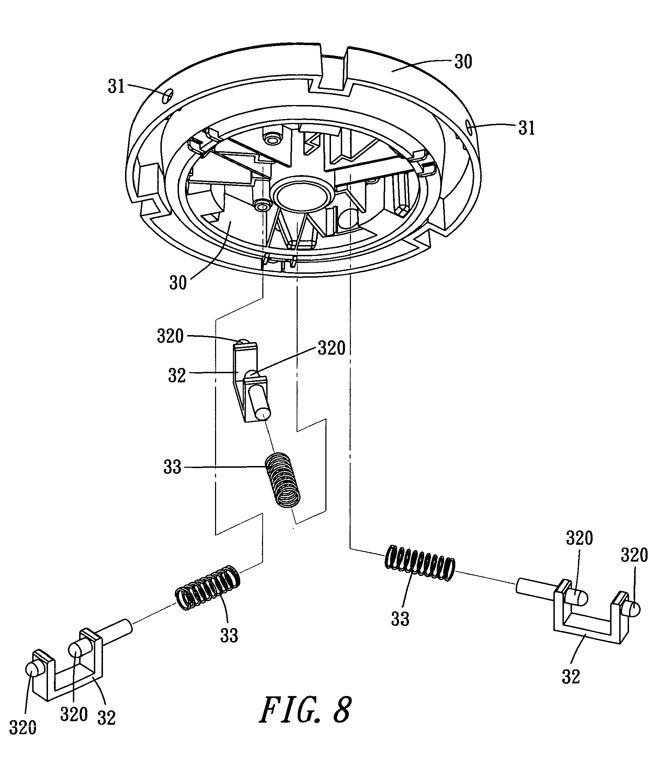

FIG. 8 is an exploded view of the structure of the clutch of the second exemplary embodiment of this invention; and
FIG. 9 is an assembled sectional view of the blade turntable and the clutch of the second exemplary embodiment of this invention.

### DETAILED DESCRIPTION OF THE INVENTION

To achieve the aforementioned objects of the present invention, the techniques adopted and the achievable function are detailed described with reference to the following exemplary embodiments.

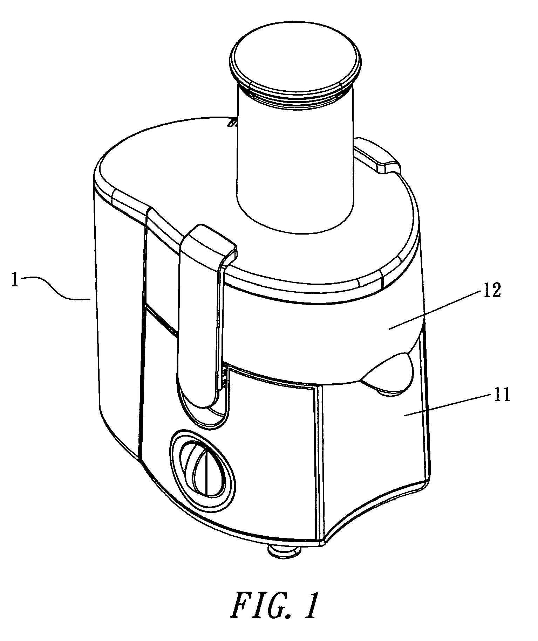

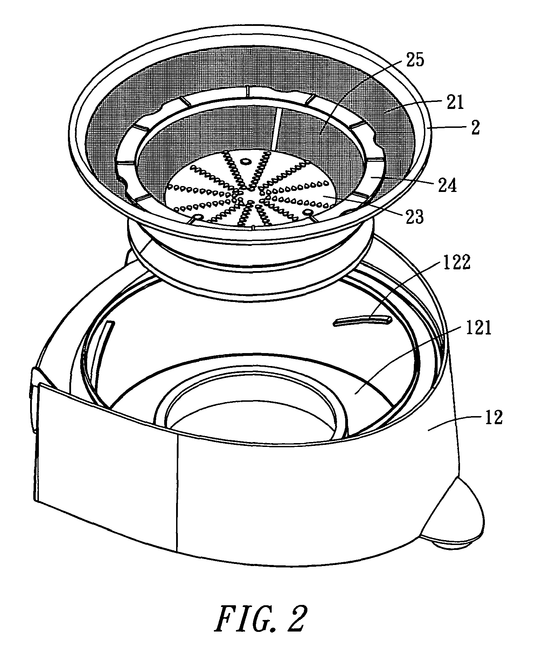

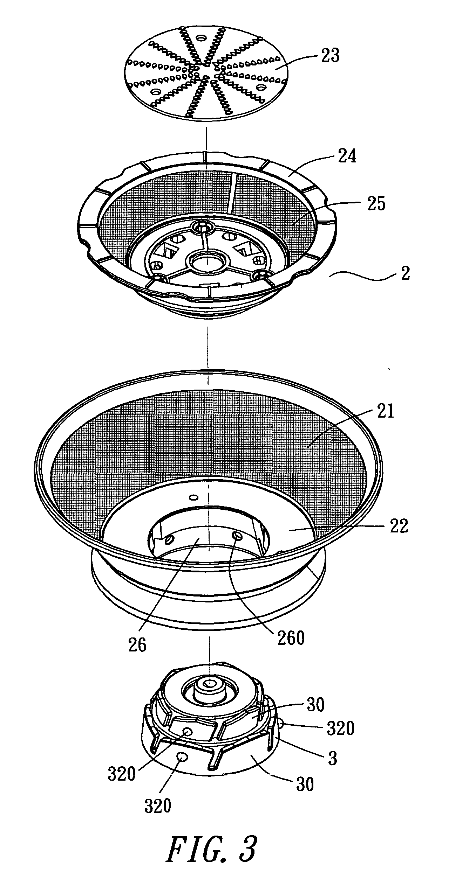

Referring to FIGS. 1 ∼ 4, the juicer of an exemplary embodiment of this invention comprises:
a body 1, comprising a core 11 and a middle member 12 placed on top of the core 11, where the core 11 is provided with a driving unit (for instance: motor) in its interior, while the middle member 12 is provided with a receptacle 121 in its interior, and the receptacle 121 has inclined protruded ribs 122 on its inner wall, which are part of the all-in-on shaping.
a blade turntable 2 (referring to FIGS.2 & 3), set up in the receptacle 121 of the middle member 12, and at its bottom having axial embedding coupling with the clutch 3, which is at the terminal of the driving unit, to enable the driving unit to drive the blade turntable 2 for rotation. Aside from a first filter 21 set up around the blade turntable 2, a disk-shaped first blade 23 is set up on the bottom stand 22 in the first filter 21, and a hollow second blade 24 is set up on the top of the first blade 23, where a second filter 25 is built in between the first blade 23 and the second blade 24, to enable the second filter 25 to be placed inside the first filter 21, which boosts the efficiency of the juice filtering by exploiting both the first filter 21 and the second filter 25 during juice extraction. The aforesaid second blade 24 can function as a sharp blade and also as a rib for the squeeze. As the blade turntable 2 is driven by the driving unit for carrying out high speed rotation, the first blade 23 will proceed to grind, cut and squeeze the food ingredients on the bottom, while the second blade 24 will also grind, cut and squeeze the food ingredients as they float due to the high speed rotation. Through the joint efforts of the first blade 23 and the second blade 24, the efficiency of the juice extraction is boosted substantially. The declined protruded ribs 122 on the inner wall of the receptacle 121 of the middle member 12 are devised for changing the up airflow due to rotation downward, which helps to press the extracted ingredients for the advancement of the juice extraction.

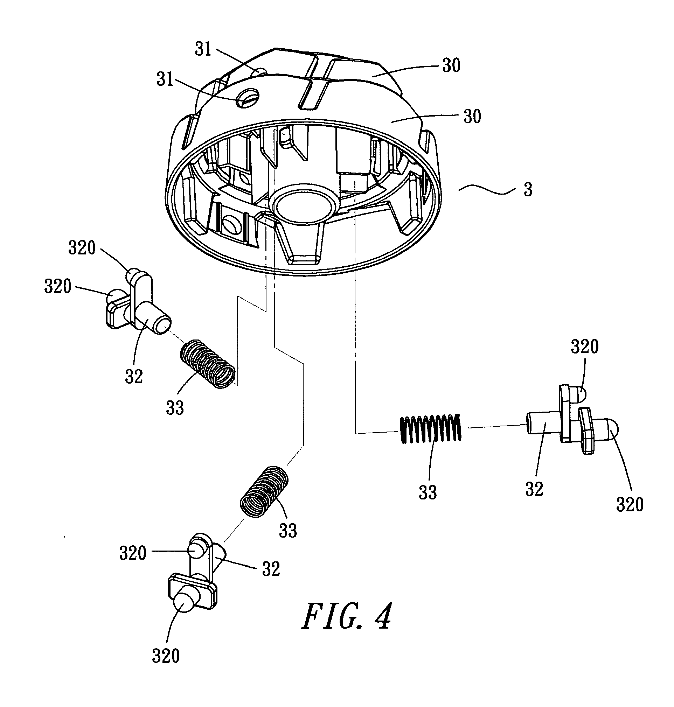

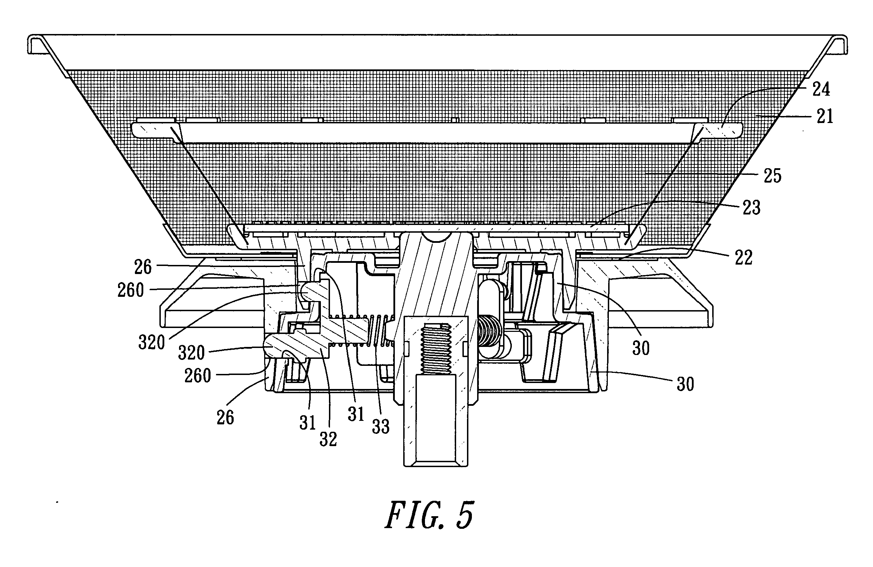

The aforesaid clutch 3 (referring to FIGS. 3 & 4), is made up of plural (two) tiers of joining surfaces 30, in the shape of top tier and bottom tier arrangement, where the outer diameter of the top tier is shorter than that of the bottom tier, and each joining surface 30 of one tier is provided with a symmetric bead hole 31. A radial rod 32 is set up in the joining surface 30 corresponding to each bead hole 31, where the rod 32 is joined with a spring 33 in the way that the spring 33 pushes the rod to have the top and bottom curved sides 320 at its end moved through the corresponding bead holes 31 and exposed on the joining surfaces 30 of the top and bottom tiers respectively. The blade turntable 2 is provided with an embedding holder 26 at the end connected to the clutch 3, where the inner diameters of the embedding holder 26 are fit to the outer diameters of the joining surfaces 30 of the clutch 3. The embedding holder 26 is also in the shape of top tier and bottom tier arrangement to join those tiers of the clutch 3. And the embedding holder 26 is provided with an embedding hole 260 corresponding to each location of the protruded curved side 320 of the rod 32 at the corresponding joining surface. Therefore, once the blade turntable 2 and the clutch 3 are connected together, the plural tiers of the embedding holder 26 and those of the joining surfaces 30 are joined together in a top and bottom arrangement. And each curved side 320 of a rod 32 is lodged in the corresponding embedding hole 260 (shown in FIG. 5), which establishes a firm coupling between the blade turntable 2 and the clutch 3. Unless a large force to pull the blade turntable 2 up to overcome the elastic force, it is unlikely for the blade turntable 2 and the clutch 3 to come off to each other along the axial direction.

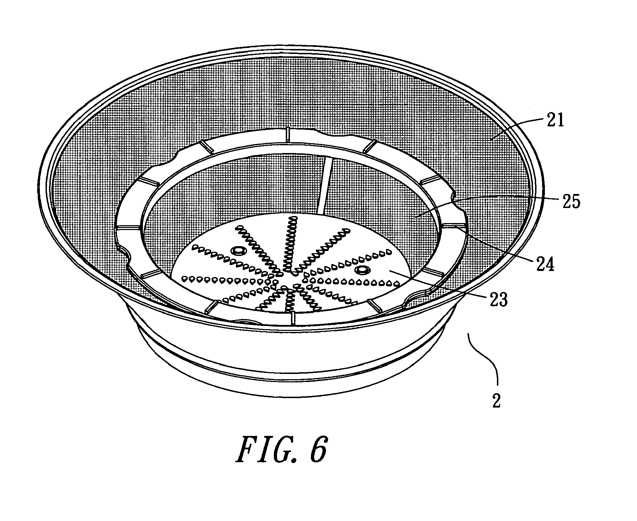

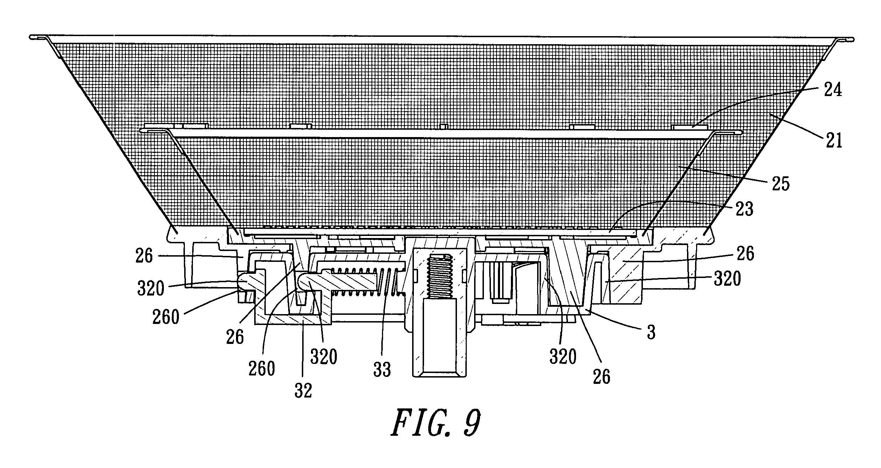

Referring to FIGS. 6 ∼ 9, the clutch 3 and the blade turntable 2 are in axial embedded coupling, to enable the blade turntable 2 driven by the driving unit to rotate. The plural (two) tiers of joining surfaces 30 of the clutch 3 to join the blade turntable 2 can be replaced by one plane and a design of inner tier and outer tier arrangement with a joining gap between the two. Each joining surface 30 of one tier is provided with a symmetrical bead hole 31. And a radial rod 32 is set up in the joining surface 30 corresponding to each bead hole 31, where the rod 32 is joined with a spring 33 in the way that the spring 33 pushes the rod to have the front and rear curved sides 320 at its end moved through the corresponding bead holes 31 and exposed on the joining surfaces 30 of the inner and outer tiers respectively. The blade turntable 2 is provided with an embedding holder 26 at the end connected to the clutch 3, where the inner diameters of the embedding holder 26 are fit to the outer diameters of the joining surfaces 30 of the clutch 3. The embedding holder 26 is also in the shape of inner tier and outer tier arrangement to join those tiers of the clutch 3. And the embedding holder 26 is provided with an embedding hole 260 corresponding to each location of the protruded curved side 320 of the rod 32 at the corresponding joining surface. Therefore, once the blade turntable 2 and the clutch 3 are connected together, the plural tiers of the embedding holder 26 and those of the joining surfaces 30 are joined together in an inner and outer arrangement. And each curved side 320 of a rod 32 is lodged in the corresponding embedding hole 260 (shown in FIG. 9), which establishes a firm coupling between the blade turntable 2 and the clutch 3. Unless a large force to pull the blade turntable 2 up to overcome the elastic force, it is unlikely for the blade turntable 2 and the clutch 3 to come off to each other along the axial direction.

Based on the foregoing description, this invention has at least the following advantages and features:
1.) The clutch is a multiple-tier design, and joins the blade turntable in an axial coupling with a springy rod, which substantially boosts the stability of the joining with the blade turntable.
2.) A design of multiple blades and filters, which is exploiting plural blades to grind, cut and squeeze food ingredients to lift the efficiency of juice extraction, and exploiting plural filters to boost the efficiency of juice filtering.
3.) The declined protruded ribs on the inner wall of the receptacle of the middle member are devised for changing the up airflow due to the rotation downward, which helps to press the extracted ingredients for the advancement of the juice extraction.

To sum up, the present invention is construed as not only novel but useful.

## Claims

1. A juicer structure, comprising:
a body (1), comprising a core (11) and a middle member (12) placed thereon, where the core (11) is provided with a driving unit therein, while the middle member (12) is provided with a receptacle (121) therein; and
a blade turntable (2), set up in the receptacle (121) of the middle member (12), and having axial embedding coupling with a clutch (3) at its bottom, where the clutch (3) is located at the terminal of the driving unit, to enable said blade turntable (2) driven by the driving unit for rotation; a filter (21) being set up around said blade turntable (2), and a disk-shaped blade (23) being set up on a bottom stand (22) in the filter (21);
**characterized in that**: the joining between the clutch (3) and said blade turntable (2) being made of a plurality of tiers of joining surfaces (30), and each joining surface (30) of one tier being provided with a symmetric bead hole (31), and a radial rod (32) being set up in the joining surface (30) corresponding to each bead hole (31), where each rod (32) is joined with a spring (33) in the way that the spring (33) pushes the rod (32) to have the curved side (320) at one end of the rod (32) moved through the corresponding bead hole (31) and exposed on the corresponding joining surfaces (30); said blade turntable (2) being provided with an embedding holder (26) at the end connected to the clutch (3), where the inner diameter of the embedding holder (26) is fit to the outer diameter of the joining surfaces (30) of the clutch (3), and the embedding holder (26) being provided with an embedding hole (260) corresponding to each location of the protruded curved side (320) of the rod (32), as said blade turntable (2) and the clutch (3) being connected together, the embedding holder (26) and the joining surfaces (30) being joined together in a plural-tier embedding, and each curved side (320) of the rod (32) being lodged in the corresponding embedding hole (260) for an axial connection.

2. A juicer structure as in claim 1 wherein the plural tiers of joining surfaces (30) between the clutch (3) and said blade turntable (2) are in the shape of top tier and bottom tier arrangement, and the outer diameter of the top tier being shorter than that of the bottom tier, while the embedding holder (26) of said blade turntable (2) has the matching design, where the curved sides (320) at the end of the rod (32) are set up in the way to enable the curved sides (320) to moved through the corresponding bead holes (31) and exposed on the joining surfaces (30) of the top and bottom tiers respectively.

3. A juicer structure as in claim 1 wherein the plural tiers of joining surfaces (30) between the clutch (3) and said blade turntable (2) are in one plane and an inner tier and outer tier arrangement design with a joining gap between the two, while the embedding holder (26) of said blade turntable (2) has the matching design, where the curved sides (320) at the end of the rod (32) are set up in the way to enable the curved sides (320) to moved through the corresponding bead holes (31) and exposed on the joining surfaces (30) of the inner and outer tiers respectively.

4. A juicer structure as in claim 1 wherein the inner wall of the receptacle (121) of the middle member (12) is set up with a plurality of inclined protruded ribs (122).

5. A juicer structure as in claim 1 wherein a hollow second blade (24) is set up on the top of the blade (23), and a second filter (25) being built in between the two blades (23), (24) to enable the second filter (25) to be placed inside the inherent filter.

## Patentansprüche

1. Entsafterstruktur, umfassend:
einen Körper (1), der einen Kern (11) und ein darauf platziertes mittleres Element (12) umfasst, wo der Kern (11) mit einer Antriebseinheit darin versehen ist, während das mittlere Element (12) mit einer Aufnahme (121) darin versehen ist; und
eine Messerdrehscheibe (2), die in der Aufnahme (121) des mittleren Elements (12) angeordnet ist und eine axiale Einbettungskopplung mit einer Kupplung (3) an ihrem Boden aufweist, wo die Kupplung (3) am Endstück der Antriebseinheit angeordnet ist, um der Messerdrehscheibe (2), die von der Antriebseinheit angetrieben ist, das Drehen zu ermöglichen; wobei ein Filter (21) um die Messerdrehscheibe (2) herum angeordnet ist und ein scheibenförmiges Messer (23) auf einem Bodengestell (22) in dem Filter (21) angeordnet ist;
**dadurch gekennzeichnet, dass**: die Verbindung zwischen der Kupplung (3) und der Messerdrehscheibe (2) aus einer Vielzahl von Reihen aus Verbindungsflächen (30) hergestellt ist und jede Verbindungsfläche (30) einer Reihe mit einer symmetrischen Randbohrung (31) versehen ist und ein radialer Stab (32) in der Verbindungsfläche (30), die jeder Randbohrung (31) entspricht, angeordnet ist, wo jeder Stab (32) mit einer Feder (33) auf die Weise verbunden ist, dass die Feder (33) auf den Stab (32) drückt, damit die gebogene Seite (320) an einem Ende des Stabs (32) durch die entsprechende Randbohrung (31) bewegt wird und an den entsprechenden Verbindungsflächen (30) freiliegend ist; die Messerdrehscheibe (2) an dem Ende, das mit der Kupplung (3) verbunden ist, mit einer Einbettungshalterung (26) versehen ist, wo der Innendurchmesser der Einbettungshalterung (26) an den Außendurchmesser der Verbindungsflächen (30) der Kupplung (3) angepasst ist, und die Einbettungshalterung (26) mit einer Einbettungsbohrung (260) versehen ist, die jeder Position der herausragenden gebogenen Seite (320) des Stabs (32) entspricht, wenn die Messerdrehscheibe (2) und die Kupplung (3) miteinander verbunden sind, die Einbettungshalterung (26) und die Verbindungsflächen (30) in einer mehrreihigen Einbettung miteinander verbunden sind, und jede gebogene Seite (320) des Stabs (32) zur axialen Verbindung in der entsprechenden Einbettungsbohrung (260) untergebracht ist.

2. Entsafterstruktur nach Anspruch 1, wobei die mehreren Reihen der Verbindungsflächen (30) zwischen der Kupplung (3) und der Messerdrehscheibe (2) die Form einer Anordnung aus oberer Reihe und unterer Reihe aufweisen und der Außendurchmesser der oberen Reihe kleiner ist als der der unteren Reihe, während die Einbettungshalterung (26) der Messerdrehscheibe (2) die passende Konstruktion aufweist, wo die gebogenen Seiten (320) am Ende des Stabs (32) derart angeordnet sind, dass die gebogenen Seiten (320) durch die entsprechenden Randbohrungen (31) bewegt werden können und an den Verbindungsflächen (30) der oberen beziehungsweise unteren Reihe freiliegend sein können.

3. Entsafterstruktur nach Anspruch 1, wobei die mehreren Reihen der Verbindungsflächen (30) zwischen der Kupplung (3) und der Messerdrehscheibe (2) in einer Ebene liegen und eine Anordnungsgestaltung aus innerer Reihe und äußerer Reihe mit einem Verbindungsspalt zwischen den beiden sind, während die Einbettungshalterung (26) der Messerdrehscheibe (2) die passende Konstruktion aufweist, wo die gebogenen Seiten (320) am Ende des Stabs (32) derart angeordnet sind, dass die gebogenen Seiten (320) durch die entsprechenden Randbohrungen (31) bewegt werden können und an den Verbindungsflächen (30) der inneren beziehungsweise äußeren Reihe freiliegend sein können.

4. Entsafterstruktur nach Anspruch 1, wobei die Innenwand der Aufnahme (121) des mittleren Elements (12) mit einer Vielzahl von geneigten vorstehenden Rippen (122) versehen ist.

5. Entsafterstruktur nach Anspruch 1, wobei ein hohles zweites Messer (24) oben auf dem Messer (23) angeordnet ist und ein zweiter Filter (25) zwischen den beiden Messern (23), (24) eingebaut ist, damit der zweite Filter (25) in dem Eigenfilter platziert werden kann.

## Revendications

1. Structure de centrifugeuse, comprenant :
un corps (1), comprenant un noyau (11) et un élément intermédiaire (12) placé sur celui-ci, le noyau (11) comportant une unité d'entraînement dans celui-ci, tandis que l'élément intermédiaire (12) comporte un réceptacle (121) dans celui-ci ; et
une plaque tournante à lames (2), montée dans le réceptacle (121) de l'élément intermédiaire (12), et ayant un couplage axial à emboîtement avec un embrayage (3) au niveau de sa partie inférieure, l'embrayage (3) étant situé à l'extrémité de l'unité d'entraînement, de façon à permettre à ladite plaque tournante à lames (2) d'être entraînée en rotation par l'unité d'entraînement ; un filtre (21) étant monté autour de ladite plaque tournante à lames (2), et une lame en forme de disque (23) étant montée sur un socle inférieur (22) dans le filtre (21) ;
**caractérisée par le fait que** : l'assemblage entre l'embrayage (3) et ladite plaque tournante à lames (2) est fait d'une pluralité de paliers de surfaces d'assemblage (30), et chaque surface d'assemblage (30) d'un palier comporte un trou circulaire (31) symétrique, et une tige (32) radiale montée dans la surface d'assemblage (30) correspondant à chaque trou circulaire (31), chaque tige (32) étant assemblée à un ressort (33) de telle sorte que le ressort (33) pousse la tige (32) pour amener le côté arrondi (320) à une extrémité de la tige (32) à être déplacé à travers le trou circulaire (31) correspondant et exposé sur les surfaces d'assemblage (30) correspondantes ; ladite plaque tournante à lames (2) comportant un support d'emboîtement (26) au niveau de l'extrémité reliée à l'embrayage (3), le diamètre interne du support d'emboîtement (26) étant ajusté au diamètre externe des surfaces d'assemblage (30) de l'embrayage (3), et le support d'emboîtement (26) comportant un trou d'emboîtement (260) correspondant à chaque emplacement du côté arrondi (320) saillant de la tige (32), lorsque ladite plaque tournante à lames (2) et l'embrayage (3) sont assemblés l'un à l'autre, le support d'emboîtement (26) et les surfaces d'assemblage (30) étant assemblés ensemble dans un emboîtement à plusieurs paliers, et chaque côté arrondi (320) de la tige (32) étant logé dans le trou d'emboîtement (260) correspondant pour une liaison axiale.

2. Structure de centrifugeuse selon la revendication 1, **caractérisée par le fait que** la pluralité de paliers de surfaces d'assemblage (30) entre l'embrayage (3) et ladite plaque tournante à lames (2) sont sous la forme d'un agencement de palier supérieur et de palier inférieur, et le diamètre externe du palier supérieur est inférieur à celui du palier inférieur, tandis que le support d'emboîtement (26) de ladite plaque tournante à lames (2) a la conception correspondante, où les côtés arrondis (320) à l'extrémité de la tige (32) sont configurés de façon à permettre aux côtés arrondis (320) d'être déplacés à travers les trous circulaires (31) correspondants et exposés sur les surfaces d'assemblage (30) des paliers supérieur et inférieur respectivement.

3. Structure de centrifugeuse selon la revendication 1, **caractérisée par le fait que** la pluralité de paliers des surfaces d'assemblage (30) entre l'embrayage (3) et ladite plaque tournante à lames (2) sont dans un plan et une conception d'agencement de palier interne et de palier externe avec un espace d'assemblage entre les deux, tandis que le support d'emboîtement (26) de ladite plaque tournante à lames (2) a la conception correspondante, où les côtés arrondis (320) à l'extrémité de la tige (32) sont configurés de façon à permettre aux côtés arrondis (320) d'être déplacés à travers les trous circulaires (31) correspondants et exposés sur les surfaces d'assemblage (30) des paliers interne et externe respectivement.

4. Structure de centrifugeuse selon la revendication 1, **caractérisée par le fait que** la paroi interne du réceptacle (121) de l'élément intermédiaire (12) est munie d'une pluralité de nervures saillantes inclinées (122).

5. Structure de centrifugeuse selon la revendication 1, **caractérisée par le fait qu'**une seconde lame creuse (24) est montée sur le dessus de la lame (23), et un second filtre (25) est incorporé entre les deux lames (23), (24) pour permettre au second filtre (25) d'être placé à l'intérieur du filtre inhérent.
